# EUROPEAN PATENT APPLICATION

(11) **EP 3 349 500 A1**
(43) Date of publication of application: **18.07.2018**
(21) Application number: 17001292.6
(22) Date of filing: 26.07.2017
(51) Int. Cl.: H04W 24/02

(54) **ENHANCEMENT OF A CELLULAR MOBILE NETWORK**

(71) Applicant: smartTECH GmbH, 83026 Rosenheim (DE)
(72) Inventor: Fabian, Ronald, 83075 Bad Feilnbach (DE); Detterbeck, Anna, 83115 Neubeuern (DE)
(74) Representative: Reichert & Lindner Partnerschaft Patentanwälte

(57) **Abstract**

The invention relates to a method for enhancing a cellular mobile network comprising Network Elements (NE) as a network control, a plurality of transmission stations and a plurality of individual User Equipment (UE), wherein both
A) a) a Dominant Customer Experience Analysis (D-CEA) below cell level for dominant traffic and also
A) b) an Event Customer Experience Analysis (E-CEA) with individual subscribers within said cellular mobile network are carried out and
B) based on the results thereof at least one parameter of at least one of the components of said cellular mobile network is adapted in a manner so that Quality of Service (QoS) performance is improved.

Furthermore, the invention relates to a system for enhancing a cellular mobile network comprising Network Elements (NE) as a network control, a plurality of transmission stations and a plurality of individual User Equipment (UE), wherein the system is adapted and contains all components to carry out the method.

## Description

The present invention relates to enhancing a cellular mobile network and especially to improving reception and transmission quality for individual customer devices.

WO 2010/081658 A2 concerns amongst others a method of selecting enhancements to a wireless communication system on basis of deriving a probability density function for a location of a wireless communication unit including the steps: deriving a quality rating for the wireless communication link between the wireless communication unit and the wireless communication network, and using the output information and the quality rating in a decision on enhancements to the wireless communication system. The quality rating being derived amongst others from one or more received signal powers recorded by the wireless communication unit from network sectors of the wireless communication network or one or more measurements of the received signal-to-noise ratio recorded by the wireless communication unit from network sectors of the wireless communication network. The results of appropriate post-processing may be used in decision making such as decisions about improvements of radio resource management and its parameter tuning as well as configuration management of advanced coordination of infrastructure / end-user equipment for e.g. interference reductions, traffic, service load, carrier aggregation, inter cell interference coordination solutions, power distributions, grade of quality as well as network accessibility, retainability and mobility management of mobile networks, for example by adding new base stations, or upgrading an antenna in a network sector, for specific use case requirement.

The known method is very complex and inaccurate, and therefore the present invention intends to provide for an easier and more exact method for enhancing a wireless communication network and especially for improving reception and transmission quality for individual customer devices.

This task is fulfilled with a method according to claim 1. Preferred and advantageous further embodiments result from the depending claims and their combinations.

Thus the invention provides for a method for enhancing a cellular mobile network comprising Network Elements (NE) as a network control, a plurality of transmission stations and a plurality of individual User Equipment (UE), wherein both
A) a) a Dominant Customer Experience Analysis (D-CEA) below cell level for dominant traffic and also
A) b) an Event Customer Experience Analysis (E-CEA) with individual subscribers within said cellular mobile network are carried out and
B) based on the results thereof at least one parameter of at least one of the components of said cellular mobile network is adapted in a manner so that Quality of Service (QoS) performance is improved.

In other words the invention especially provides for a method to improve Quality of Service (QoS) performance below cell level for dominant traffic with a Dominant Customer Experience Analysis (D-CEA) coordinated solution and with also including Event Customer Experience Analysis (E-CEA) coordinated solution with individual subscribers within a cellular mobile network.

The new method provides for an easier and more exact method for enhancing a wireless communication network, or more concrete a cellular mobile network, and especially for improving reception and transmission quality for individual customer devices, and for a method and system which considers NW-traffic as well as NW-capability / limitations regarding hints network deployment strategies, QoS efforts, traffic distribution over the entire cells and clustering of cells [overall network behavior view from equipment and NW/UE-devices] with "NW" as abbreviation for "Network" and "UE" as abbreviation for "User Equipment". All these issues relate to the potential grade of improvements for single users out of group of users depending on the NW-deployment status. Therefore there is a need to consider and distinguish dominant customer experience considering traffic behavior distribution below cell level investigations [D-CEA] and single user devise investigations [E-CEA] according the cluster of neighboring users and its [below] cell / polygon performance.

Preferably within this method said Dominant Customer Experience Analysis (D-CEA) is a method to localize and determine a specific grade of quality or service (geo-Key Performance Indicator (KPI)) from point of radio conditions measured by UE and network nodes for the dominant traffic in a geographical area within a cell cluster, and defines for the dominant users a statistically significant QoS in such an area below cell level.

In addition or alternatively said Dominant Customer Experience Analysis (D-CEA) may provide for the detection of dominant traffic groups below cell level and the analysis of the quality of service experienced on all layers 1 to 3 by such groups.

In another preferred embodiment said Dominant Customer Experience Analysis (D-CEA) may use as input OSS PM data obtained directly from the NE as well as the GPS (Global Positioning System) coordinates of the network sites and configuration data like antenna configuration and RRM parameter settings.

Furthermore, with preference said Dominant Customer Experience Analysis (D-CEA) may identify dominant user groups within cells and gives for each group average GPS coordinates and average KPI for radio and service quality.

Further preferred is that said Dominant Customer Experience Analysis (D-CEA),
i) if for a KPI raw counters are available in terms of a histogram, estimates also the gradient of this KPI along increasing distance from the radio site as e.g. the decrease of coverage in dB per km,
ii) constructs from these raw geo-KPI a grid map with configurable pixel size, indicating for each pixel the average radio and QoS performance, and
iii) gives, if at a specific pixel several cells overlap each other, a weighted average, taking into account the traffic distribution and if available also the gradient of the KPI within each overlapping cell.

Another preferred embodiments includes that said Dominant Customer Experience Analysis (D-CEA) processes OSS performance data taken with high time granularity, as e.g. 1 hour, over a long time period, as e.g. 1 month.

Next, it is also preferred that said Event Customer Experience Analysis (E-CEA) is a method to identity and localize a specific single user (UE geo-KPI) which is based either on events triggered by a specific quality or service from point of radio conditions, or on forced measurement reporting of the UE. E-CEA is performed by 3GPP layer 3 protocol call flow detection and optional additional scanning of the vendor proprietary MAC layer.

A further preferred method comprises that said Event Customer Experience Analysis (E-CEA) provides for geo-positioning of single events coming up on layer 3, and uses requires as input at least the layer 3 call flows together with the GPS coordinates of the sites.

The aforementioned method can further include that said Event Customer Experience Analysis (E-CEA) also additionally uses the layer 2 MAC protocol to obtain a high accuracy for positioning within Long-Term Evolution (LTE) networks.

The method of the invention may be further developed in that both D-CEA and E-CEA are combined into a single method in which D-CEA gives the typical, statistically significant QoS for areas below cell level, which is benchmarked against the individual QoS determined for single users (events) by E-CEA so as to allow filtering out untypical, statistically unstable layer 3 measurement results to evaluate the impact of long term QoS for network optimization requirements and tasks.

Yet another preferred embodiment includes that, to benchmark layer 3 events positioned with E-CEA with the QoS located by D-CEA both D-CEA and E-CEA interact with each other so that lower layer root causes, as e.g. poor Uplink (UL) coverage, for layer 3 events, as e.g. call drop, can be located below cell level as well, so as to reach network performance optimization on all layers.

Furthermore, with preference said Event Customer Experience Analysis (E-CEA) provides for process performance data for lower time period in comparison to Dominant Customer Experience Analysis (D-CEA), as e.g. 1 week, and it indicates rather short term geo-KPI below cell level with preferably higher spatial resolution than Dominant Customer Experience Analysis (D-CEA), but possibly lower statistical stability so as to allow the NW operator to detect small spots with abnormal performance, which are not resolved by Dominant Customer Experience Analysis (D-CEA), and to evaluate the root causes of individual end customer complains.

In another preferred embodiment D-CEA provides for geo-KPI grids which are stable against fading and other short term statistical fluctuations, as these are based on average KPI assigned to average positions of dominant user groups within cells so that these maps can be used as reference when benchmarking the layer 3 performance indicated by the call flow for single users with the lower layer performance indicated by OSS counter statistic for user groups, and E-CEA provides for geo-KPI grids which are quite sensitive against short term fluctuations of the radio and related QoS performance, as they are based on single events assigned to positions of individual users so that positions are estimated again on the basis of single events, measurement reports giving radio information for the serving and adjacent cells.

The invention also provides for a system for enhancing a cellular mobile network comprising Network Elements (NE) as a network control, a plurality of transmission stations and a plurality of individual User Equipment (UE), wherein the system is adapted and contains all components to carry out the above explained method.

In the following the invention is explained in general and by embodiments which are examples only with reference to the accompanying drawings in which:
Fig. 1 shows a general explanation of components and measures in a wireless communication network according to an embodiment of the present invention;
Fig. 2 is a schematic sketch of further details of the wireless communication network according to an embodiment of the present invention;
Fig. 3 depicts in a diagram the principle steps applied by a Module A for Dominant Customer Experience Analysis (D-CEA) according to a first more detailed embodiment of the present invention;
Fig.4 is an explanation of the definition of geo-Key Performance Indicator (KPI) below cell level within clusters and the measurement method to control customer and network experience by Network Elements (NE) for Radio Resource Management (RRM) according to the first more detailed embodiment of the present invention in accordance with the diagram of Fig. 3;
Fig. 5 shows the principle steps applied by a Module B in a diagram for the generation of a geo-KPI grid for a cell cluster by Quality of Service (QoS) prediction for single users within cells by Event Customer Experience Analysis (E-CEA) according to the first more detailed embodiment of the present invention;
Fig. 6 is a schematic depiction with a geo-KPI grid QoS prediction derived from single event / call positioning based on layer 3 monitoring for the first more detailed embodiment of the invention in accordance with Fig. 5;
Fig. 7 explanatorily shows in a diagram principle steps for interaction between Module A and Module B with a mapping of geo KPI grid based on single events with such one based on typical QoS performance of dominant users, according to the first more detailed embodiment of the present invention;
Fig. 8 is a schematic arrangement of elements of a Module A with geo-mapping function unit for D-CEA of another more detailed embodiment of the present invention;
Fig. 9 schematically explains the azimuths defined by adjacent cells;
Fig. 10 is a schematic arrangement of elements of the geo-track module for UE and geo-KPI unit for E-CEA (with RRC) and their arrangements of a further more detailed embodiment of the present invention;
Fig. 11 schematically depicts interacting elements between Module A and Module B according to even another more detailed embodiment of the present invention;
Fig. 12 is a schematic arrangement of elements of the geo-track module for UE and geo-KPI unit for E-CEA (without RRC) of an even another further more detailed embodiment of the present invention; and
Fig. 13 shows an exemplary definition of cell border in connection with the even another further more detailed embodiment of the present invention according to Fig. 12.

In the following the present invention is explained in general and on basis of embodiments by the way of example only, with reference to the drawings. The invention is explained in more detail based on the embodiments by the way of example only i.e. the invention is not limited to these embodiments. Method and device features are received from device and method descriptions, respectively. Individual features described and/or shown in connection with an individual embodiment are not limited to this embodiment or the combination with the other features of this embodiment but can, in the range of the technical possibilities, be combined with any other variations even if not explicitly mentioned in the present description and drawings.

Any combination of features disclosed for one specific embodiment may be used and realized alone without combination with other features from the same embodiment or other embodiments, i.e. the invention is not limited to a specific combination including all features of one embodiment or more embodiments. Furthermore, features are not only given in the following description but also in the Figures of the drawings the disclosure of which fully contribute to the explanation and presentation of the invention and its embodiments. Disclosure of the present application also includes any combination of features taken from both from the description text and the drawings.

### A) General Explanations

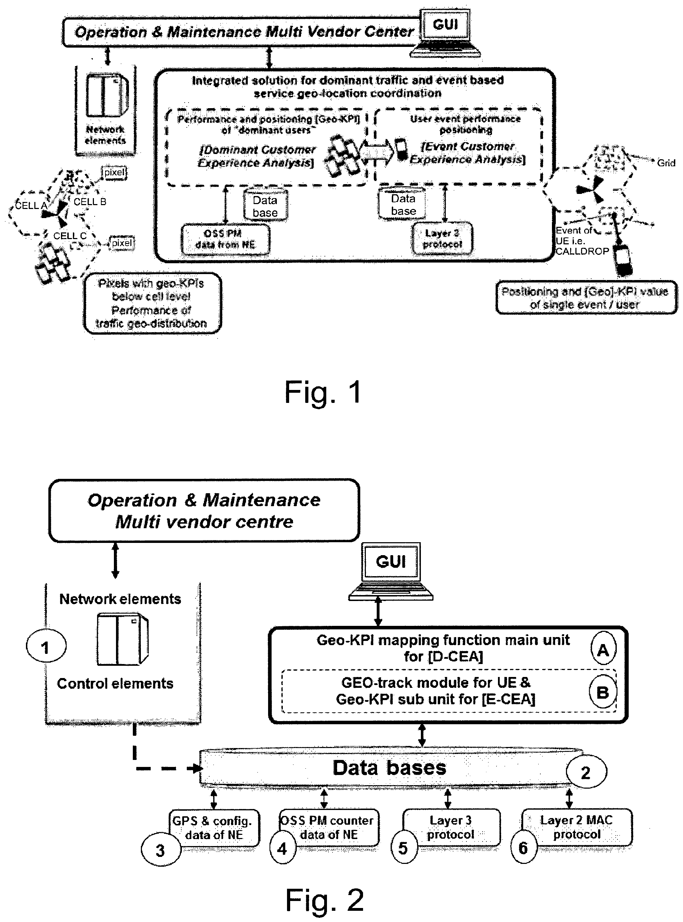

With reference to Fig. 1 which shows a general explanation of components and measures in a wireless communication network according to an embodiment of the present invention, geo-monitoring systems for mobile cellular networks usually are using event reports for network performance optimization and troubleshooting as well as for customer complain investigations. Passive probing diagnostics methods have been developed for call flow investigation, especially 3rd Generation Partnership Project (3GPP) layer 3 protocol analyzing combined with specific software applications to position single user service behavior. Network and user view diagnostics based on higher layer measurements, however, does not collect and grant data for the lower layers. With layer 3 scanning one cannot verify e.g. Radio Resource Management (RRM) procedures carried out by the Media Access Control (MAC) layer (like fast scheduling, link adaptation and fast re-transmission) and therefore not cover the corresponding use case investigation for trouble shooting and overall network optimization (e.g. check for QoS based scheduling, usage of Multiple Input Multiple Output (Antenna) (MIMO) etc.). As a consequence event call flow analysis gives only limited diagnostic results, e.g. the layer 3 call flow gives information mainly about the performance of layer 3 procedures (accessibility, retainability and mobility) itself and the occurrence of failures on the lower layers, but not about the root causes of such problems.

To overcome these gaps of conventional geo-monitoring a new method of network Performance Monitoring (PM) and optimization is presented which coordinates monitoring of all layers 1, 2 and 3 with traffic diagnostics and RRM parameter investigation and tuning. It is based on the combining both of call flow and Operational Subsystem (OSS) PM data obtained directly from the Network Elements (NE) which allows to drill down failures detected on layer 3 to root causes arising on the lower layers.

The integrated solution presents also a new way of geo-monitoring. Based on OSS PM data the new system analyses the traffic distribution within each cell and derives the average position and QoS experienced by the dominant users. This way QoS indicators for lower layers provided by OSS PM, but not by layer 3 call flow analysis are geo-located as well (D-CEA). The dominant user positioning based on OSS PM preferably is also coordinated with the single user one based on layer 3 protocol scanning (E-CEA), so that one can check for the root causes of failures detected on layer 3 below cell level.

For the sake of completeness "GUI" is used as abbreviation for "Graphical User Interface", and "RNC stands for "Radio Network Controller".

### Architecture and main elements

Corresponding to the two ways of network performance monitoring and geo-positioning the integrated solution preferably consists of two Modules A and B especially interacting with each other as schematically outlined in Fig. 2 which shows in schematic sketch further details of the wireless communication network according to a more detailed embodiment of the present invention.

### Module A

It enables the detection of dominant traffic groups below cell level and the analysis of the quality of service experienced on all layers 1 to 3 by such groups, the so-called Dominant Customer Experience Analysis (D-CEA). It requires as input OSS PM data obtained directly from the NE as well as the GPS (Global Positioning System) coordinates of the network sites and configuration data like antenna configuration and RRM parameter settings.

### Module B

Describes further enhances the wireless communication network by being combined with Module A and enabling QoS diagnostics for single users and thus of customer complains (International Mobile Subscriber Identity (IMSI) based tracing) as well as for specific types of User Equipment (UE) (International Mobile Equipment Identity (IMEI) filtering). It provides geo-positioning of single events coming up on layer 3, the so-called Event Customer Experience Analysis (E-CEA), and requires as input at least the layer 3 call flows together with the GPS coordinates of the sites. To obtain a high accuracy for positioning within Long-Term Evolution (LTE) networks, additionally the layer 2 MAC protocol is required.

To benchmark layer 3 events positioned with E-CEA with the QoS located by D-CEA both modules interact with each other. This way lower layer root causes (e.g. poor Uplink (UL) coverage) for layer 3 events (e.g. call drop) can be located below cell level as well, which is essential for network performance optimization on all layers.

### Definitions

### Dominant Customer Experience Analysis (D-CEA):

It is a method to localize and determine a specific grade of quality or service (geo-Key Performance Indicator (KPI)) from point of radio conditions measured by UE and network nodes for the dominant traffic in a geographical area within a cell cluster. D-CEA defines for the dominant users a statistically significant QoS in such an area below cell level.

### Event Customer Experience Analysis (E-CEA):

It is a method to identity and localize a specific single user (UE geo-KPI) which is based either on events triggered by a specific quality or service from point of radio conditions, or on forced measurement reporting of the UE. E-CEA is performed by 3GPP layer 3 protocol call flow detection and optional additional scanning of the vendor proprietary MAC layer. The service quality based on such events or forced measurement reports, however, not always is representative for the dominant traffic detected by D-CEA in a geographical area within a cell cluster. Considering this, E-CEA alone might not be reliable to predict the QoS for the dominant users within the specified area.

As a consequence both methods are combined into a single advanced solution. D-CEA gives the typical, statistically significant QoS for areas below cell level, which is benchmarked against the individual QoS determined for single users (events) by E-CEA. This concept allows filtering out untypical, statistically unstable layer 3 measurement results to evaluate the impact of long term QoS for network optimization requirements and tasks.

### B) Concept and functions

As already mentioned, there is the main Module A and in addition also Module B considering both network optimization and customer experience requirements of Network (NW) operators. The system is able to drill down the NW status and to recognize potentials for QoS improvements from point of dominant traffic view as well as to combine this information with event based analysis based on call flow without or with complete Radio Resource Control (RRC) protocol to position UE below cell level and to benchmark dominant versus single user performance in same area. Consequently the solution preferably includes and is divided into the following two main function units.
- D-CEA for dominant user group geo-KPI analysis as a pre-requisition for E-CEA
- E-CEA for individual user geo-KPI analysis

With these units the method and corresponding system are able to analyze in detail the network quality below cell level both for the dominant NW subscribers as well as for single events assigned to individual users. To do this the system will collect input data from different sources.
- Data base for vendor / operator infrastructure (configuration data including GPS and alternative Geo-position coordinates of radio sites)
- Performance management data base for layer-1 till layer 3 (OSS counters and measurement reports from hand-sets/ devices) for D-CEA
- Layer 3 (and optionally layer 2) call-flow protocol for E-CEA.

### B) 1. OSS based Module A (D-CEA)

### Overall description

### Module A

It is part of the basis of the wireless communication network enhancement and identifies dominant user groups by detection traffic distribution from Network elements and UE measurement reports within cells and gives for each group average GPS coordinates and average KPI for radio and service quality. If for a KPI raw counters are available in terms of a histogram, then Module A estimates also the gradient of this KPI along increasing distance from the radio site (e.g. the decrease of coverage in dB per km or using clutter correction values for path loss calibration and termination to coordinate and correct measurements from counters within PM histogram - statistics). From this raw geo-KPI the Module A constructs a grid map with configurable pixel size, indicating for each pixel the average distributed Service quality below cell level from main dominant weighted traffic indicated by QoS performance GEO-Key Performance indicators. If at a specific pixel several cells overlap each other, Module A gives a weighted average, taking into account the traffic distribution related and considering Base Station and Cell / Power configurations (and if available also the gradient of the KPI) within each overlapping cell.

Module A can process Network Element performance data or OSS/PM taken with high time granularity (e.g. 1 hour) over a long time period (e.g. 1 month). This way it indicates long term geo-KPI below cell level with excellent statistical stability, allowing the NW operator to identify with very reliability areas requiring network optimization.

### Flow of operation

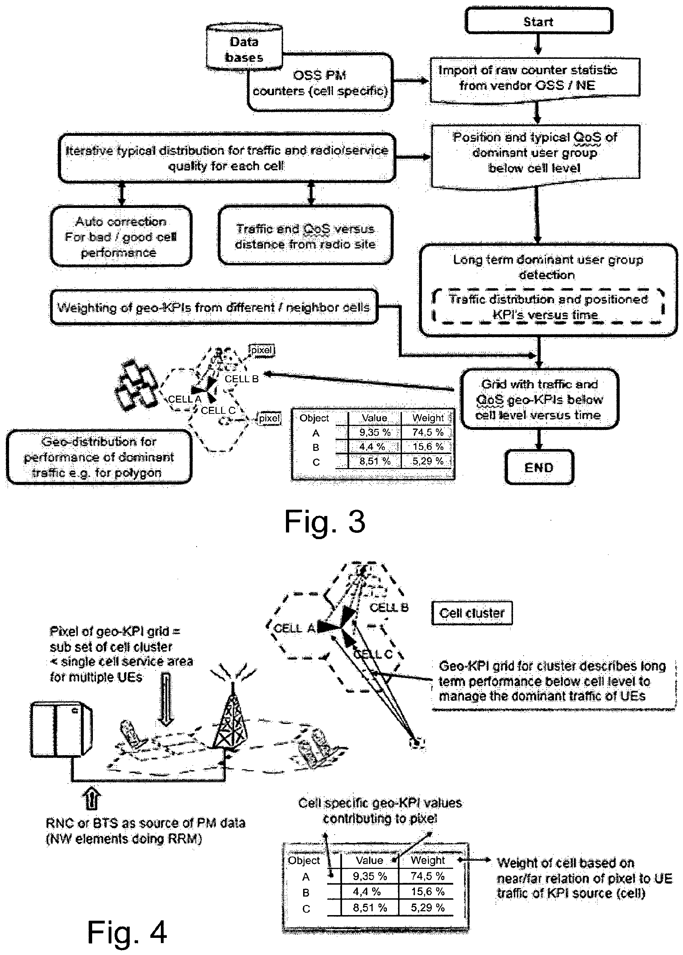

The principle steps applied by Module A in accordance with an embodiment of the present invention are shown by the diagram in Fig. 3. Here the concepts of module operation are described only, for details see the section "modules and element integration". In other words Fig. 3 is a flow chart for D-CEA unit to generate from raw OSS counter geo-KPI grids to indicate traffic and QoS distribution below cell level within cellular mobile networks.

### - Import of raw counter statistic

From the operation subsystem OSS the raw data base needed for the D-CEA module will be collected for further post processing issues. The data contain e.g. GPS coordinates and antenna configuration of the radio sites, RRM parameter settings and layer 1 to layer 3 counter statistics including propagation delay or timing advance information. The counter statistic is extracted typically once per hour for each cell.

### - Position and typical QoS of dominant user group

For each (e.g. hourly) sample the propagation delay / timing advance data are processed in an iterative manner to correct for unexpected cell performance (e.g. fragmented cell). Together with the configuration information of the radio site this processing delivers the average position of the dominant user group below cell level. The QoS related data taken simultaneously are processed as well to correct e.g. for fading, cell overlap and interference. This way the typical QoS (average and if possible also the gradient) experienced by the dominating users is obtained and assigned to their (average) position.

### - Long term dominant user group detection

With each (hourly) sample one dominant user group is detected and positioned per cell. If one performs this process over a longer time period, he can collect a substantial amount of user groups per cell, each with its own average position and QoS. This way a sample of discrete points is constructed, indicating the QoS at the geo-locations of the detected user groups.

### - Grid of traffic and QoS geo-KPI

The operator wants to know the traffic and QoS not only for discrete locations, but any place within its network. The sample of discrete points defined by the individual user groups therefore must be converted into a regular grid represented by quadratic pixels of constant size. To do this, for each user group not only the average position is taken into account, but also its spatial extension (which also follows from propagation delay / timing advance and antenna configuration information) as well as the gradient of radio / service KPI.

To estimate a geo-KPI for a pixel (X/Y), it is evaluated, which user groups are overlapping there. Each user group touching the pixel has a weight, which depends on the distance of the pixel to the average location of the user group and its spatial extension.

The KPI value valid at (X/Y) for a user group is derived from the average KPI assigned to the average position of the group and the gradient of the KPI. If no gradient can be estimated due to the lack of OSS counters, the average KPI experienced by the group is adopted for (X/Y). Finally the KPI values adopted for all the overlapping user groups at (X/Y) are averaged according their weights.

### Final result

As final output Module A provides grid maps for traffic and QoS related KPI with a spatial resolution below cell level. The maps show the distribution of the dominant users and of the QoS experienced by them on long time scale. The operator can detect there permanent traffic hot spots as well as areas of permanent poor QoS.

An explanation of the definition of geo- KPI below cell level within clusters and the measurement method to control customer and network experience by Network Elements (NE) for RRM is shown in Fig.4.

### B) 2. Call flow based Module B (E-CEA)

### Overall description

Combined Module B identifies single users within cells and gives for each individual GPS coordinates and KPI for radio and service quality. If the user is in soft handover (within a Wideband Code Division Multiple Access (WCDMA) network), the radio performance of the dominating cell is taken as the user's geo-KPI. From this raw geo-KPI the module constructs a grid map with configurable pixel size, indicating for each pixel the average radio and QoS performance.

Due to the huge amount of input data Module B can process performance data for lower time period in comparison to Module A (e.g. 1 week). It indicates rather short term geo-KPI below cell level with preferably higher spatial resolution than Module A, but lower statistical stability. It allows the NW operator to detect small spots with abnormal performance, which are not resolved by Module A, and to evaluate the root causes of individual end customer complains.

### Flow of operation

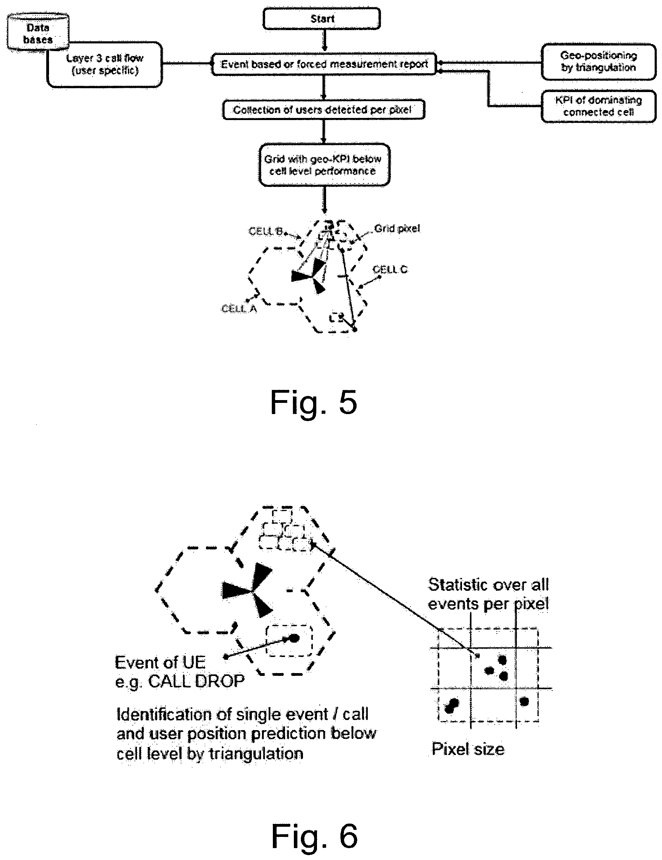

The principle steps applied by Module B according to a further embodiment of the present invention are shown by the diagram in Fig. 5 for the generation of a geo-KPI grid for a cell cluster by QoS prediction for single users within cells by E-CEA. Here the concepts of module operation are described only, for details see the section "modules and element integration".

### Call flow tracing

Either directly from the NE in form of log files, or by vendor independent probes connected to open interfaces, the layer 3 (and for LTE optionally the MAC layer) call flow will be collected. The layer 3 protocols to be considered depend on the type of network, e.g. for WCDMA the protocols RRC, NBAP and RANAP have to be taken while for LTE the protocols RRC, X2 Application Protocol (X2AP) and S1 Application Protocol (S1AP).

### Event based or forced periodic measurement report

To position a single user, the information indicated by measurement reports sent by his UE about the cells in the surroundings is analyzed. Together with the GPS coordinates and antenna configurations of the visible radio sites, the coverage reported for their cells allows to estimate the distances to them, from which finally follows the position of the user by triangulation. QoS KPI or events coming up for the user at this moment are assigned to the estimated position. If the user is connected simultaneously to several cells (Soft Handover (SHO) within WCDMA networks) the KPI indicated for the dominant cell are adopted.

### Collection of users detected per pixel

For a reliable KPI statistic individual user positions have to be collected for a longer time frame. Due to the huge amount of data to be managed by call flow tracing, however, the maximum time frame is shorter than for D-CEA (e.g. not more than 1 week). Like for D-CEA a sample of discrete points is obtained, but now each point represent a single user event and not a user group.

### Grid with geo KPI below cell level

Again from the sample of discrete points a regular grid will be constructed. As much more individual events can be collected per time than user groups, even for a shorter time frame one can expect that much more discrete points per cell are available for E-CEA than for D-CEA. On the other side one must take into account, that radio and related QoS KPI of single events are highly sensitive to fading and other short term effects.

To construct a regular grid from single event KPI, all events positioned within a pixel are averaged. To avoid, that the averaging suffers from users undergoing an atypical performance, the individual KPI values are benchmarked with those indicated by the D-CEA map (which is based on stable average KPI of user groups). This interaction of E-CEA and D-CEA is presented in the next section.

### Final result

As final output Module B provides grid maps for traffic and QoS related KPI with a spatial resolution which is better than for Module A. The maps show the distribution of all users and of the QoS experienced by them, but on a time scale which is shorter than for Module A. The operator can detect there small traffic hot spots as well as small areas of poor QoS, which cannot be resolved with D-CEA. This is schematically depicted in Fig. 6 with a geo-KPI grid QoS prediction derived from single event / call positioning based on layer 3 monitoring (e.g. RRC for WCDMA and LTE, S1AP for LTE E-RAB (RAB: Radio Access Bearer; E-RAB: is an EPS (Evolved Packet System) bearer set between a UE - User Equipment - and an S-GW (Serving Gateway))

### B) 3. Interaction of D-CEA & E-CEA

### Setup steps

1) OSS PM based geo-KPI QoS prediction for main traffic for clusters
2) Detection and QoS of single users/events and mapping with average user QoS performance within cluster based on dominant traffic
3) Filtering of individual calls/events impacted by high scatter of QoS and delta mapping single user performance versus typical below cell level QoS of dominant users

### Evaluation

- Filtering of atypical / statistically unstable single short term events out of significant QoS performance data of dominant users. Used for localization of customer complains (customer related management CRM and location based service LBS), but not reliable for overall NW optimization.
- Detection of statistically stable short term events consistent with significant QoS of dominant users. Marking such UE as representative for behavior of typical user group identified by D-CEA prediction within a cluster. Utilization of such events for radio root cause analysis, customer experienced management CEM, service & core network long term investigation.
- Long term versus short term KPI performance to checks for reliability of single layer 3 reports for NW optimization use cases due to high risk of statistical faults. Single events detected by layer 3 3GPP call flow investigation (RRC and (E)-RAB (RAB: Radio Access Bearer; E-RAB: is an EPS (Evolved Packet System) bearer set between a UE - User Equipment - and an S-GW (Serving Gateway)) measurements) are highly sensitive to fading, cell overshooting and fragmentation. OSS PM covers all layers and focuses on long term statistic including many significant users, offering thus network service quality predictions in sub-cell geo-areas which are much more stable against short term radio fluctuations.

### Preventing of bad L3 (Layer 3) scanning

- For each pixel of the geo-KPI grid delivered by the E-CEA module the number of events collected on it is considered. If the traffic detected on such a pixel is too low, longer term monitoring is performed.
- For each pixel the scatter of KPI values is determined. Pixels with unstable performance are classified as inconsistent with the geo-KPI grid provided by the D-CEA module and treated as areas suffering from strong short term fluctuations on the air interface.
- A delta map showing the difference between E-CEA and D-CEA is constructed to show the pixels dominated by atypical radio and service quality performance.

### Flow of operation to detect bad / unstable KPI provided by D-CEA and E-CEA

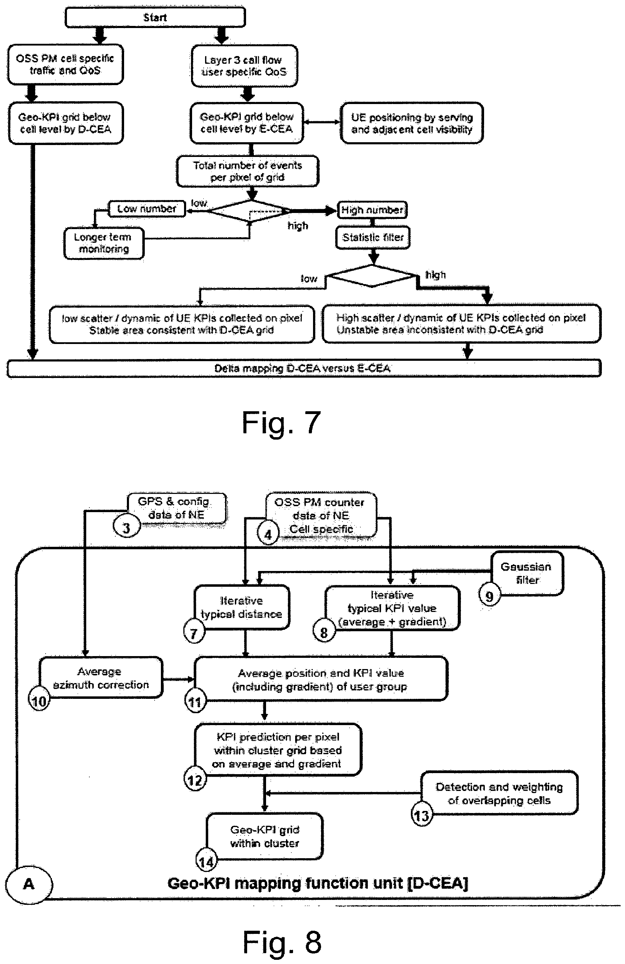

The principle steps for interaction between Module A and Module B are shown by the diagram of Fig. 7 with a mapping of geo KPI grid based on single events with such one based on typical QoS performance of dominant users. Here the concepts of operation are described only, for details see the section "modules and element integration".

### - Data input

As already mentioned, as input for D-CEA OSS PM counter statistic is used, while for E-CEA log or protocol trace files covering especially layer 3. To benchmark both data sets with each other, the time stamps of protocol messages shall correspond to the time frame during which samples of OSS data are taken.

### - Geo KPI grids below cell level

The geo-KPI grids provided by D-CEA are stable against fading and other short term statistical fluctuations, as these are based on average KPI assigned to average positions of dominant user groups within cells. Therefore these maps can be used as reference when benchmarking the layer 3 performance indicated by the call flow for single users with the lower layer performance indicated by OSS counter statistic for user groups.

The geo-KPI grids provided by E-CEA are quite sensitive against short term fluctuations of the radio and related QoS performance, as they are based on single events assigned to positions of individual users. Positions are estimated again on the basis of single events - measurement reports giving radio information for the serving and adjacent cells.

### - Total number of events per pixel of E-CEA grid

As already discussed, the basic algorithm to construct an E-CEA grid is to average the KPI values of all events positioned per pixel. To reduce the sensitivity of this process against short term fluctuations such pixels are considered only, for which enough individual positions are available according a configurable threshold. To avoid, that the grid shows many gaps due to a lack of raw positions, the time frame to collect individual users can be prolonged.

### - Statistical filter

Next the scatter of the individual KPI values per pixel is considered. A high scatter indicates, that the pixel is situated in an unstable area e.g. due to strong fading or high adjacent cell interference. Such areas must be considered as candidates for an atypical performance from the view of the dominating users of a cell.

### - Delta mapping

If KPI values are unstable, there is a high risk of mismatches between D-CEA and E-CEA maps even if enough single positions for E-CEA are available. To check for such ones delta maps D-CEA - E-CEA are generated for such KPI which are provided both by OSS counter and call flow data. Delta maps allow the operator to identify areas with atypical radio and QoS performance, which is essential for network optimization, as especially such areas often introduce customer complains e.g. due to call drops.

### B) 4. Modules and element integration

### Main elements

The main or general elements are represented by NW and control elements providing data processed by the solution and the databases to store them. It is referred to the presentation of Fig. 2.

### - Element 1 - network and control elements

The solution is able to collect data from network and control elements directly by reading either OSS PM counter statistics (covering layer 1 up to layer 3) or call flow information (3GPP layer 3 and optionally vendor MAC layer). NE are such ones responsible for radio resource management, control elements are such ones providing operation and maintenance functionality.

### - Element 2 - central data base

All data required for analysis are stored within a central data base provided by a server solution. System clients give engineers access to the server.

OSS PM data is stored in tables per object (e.g. cell), time interval (e.g. hour) and counter / KPI (e.g. call drop rate). For each event detected during a call are stored time stamp, user, serving cell (and for WCDMA the active set), type of event and measured result. The data can be aggregated over parent object (e.g. Base Transceiver Station (BTS)) or bigger time interval (e.g. day).

### - Element 3 - configuration data for NE

For data analysis the solution needs as input information about the configuration of NE like GPS coordinates of BTS, antenna configuration, (radio) parameter settings or neighbor plan. Operator defined QoS targets are considered as well.

### - Element 4 - OSS PM counter statistics

The analysis of OSS PM counter statistic provides information about cell level KPI, but also the detection of the dominant user groups within cells and the estimate of the average position and QoS experienced by the users belonging to such a group.

### - Element 5 - layer 3 protocols

Layer 3 protocols offer information about radio access performance (RRC, both for WCDMA and LTE), cell load (NBAP - Node B Application Part -, for WCDMA only) and non-access stratum performance towards the core network (RANAP - Radio Access Network Application Part - for WCDMA, S1 APPLICATION PROTOCOL (S1AP) for LTE).

### - Element 6 - layer 2 MAC protocol

The layer 2 MAC proprietary protocol contains information regarding the radio link between UE and BTS like the distance of the UE from network sites, the UE power or the status of synchronization.

### Module A geo-mapping function unit for D-CEA

The specific elements of the geo-mapping function unit for D-CEA and their arrangements of another embodiment of the present invention are schematically shown in Fig. 8.

### - Element 7 - estimate of typical distance

Each time the OSS counter statistic (element 4) is read out (e.g. hourly), for each cell the distance distribution of the connected users is obtained. Applying an iterative process using a Gaussian filter (only as an example of a preferred embodiment and not as the only possibility in the scope of the present invention; thus the invention or any overall embodiment thereof is not limited to this specific use of a Gaussian filter), within each cell the typical distance from the site is estimated.

### - Element 8 - estimate of typical KPI value

Simultaneously with the distance distribution such ones for other KPI, e.g. radio coverage and quality are obtained. Applying the same iterative algorithm, the typical performance experienced at the typical distance is estimated. If for the KPI raw counters in term of a histogram a given, additionally its dependency from the distance to the radio site is estimated as gradient.

### - Elements 9 - Gaussian filter

Due to radio problems like strong signal fluctuations, coverage holes or coverage at unwanted areas KPI distributions are affected by users showing an atypical or unstable performance. To avoid that the estimate of the typical KPI values experienced by the dominating users is affected by such particular ones, all the distributions are cleaned from outliers by a Gaussian filter.

### - Element 10 - average azimuth correction

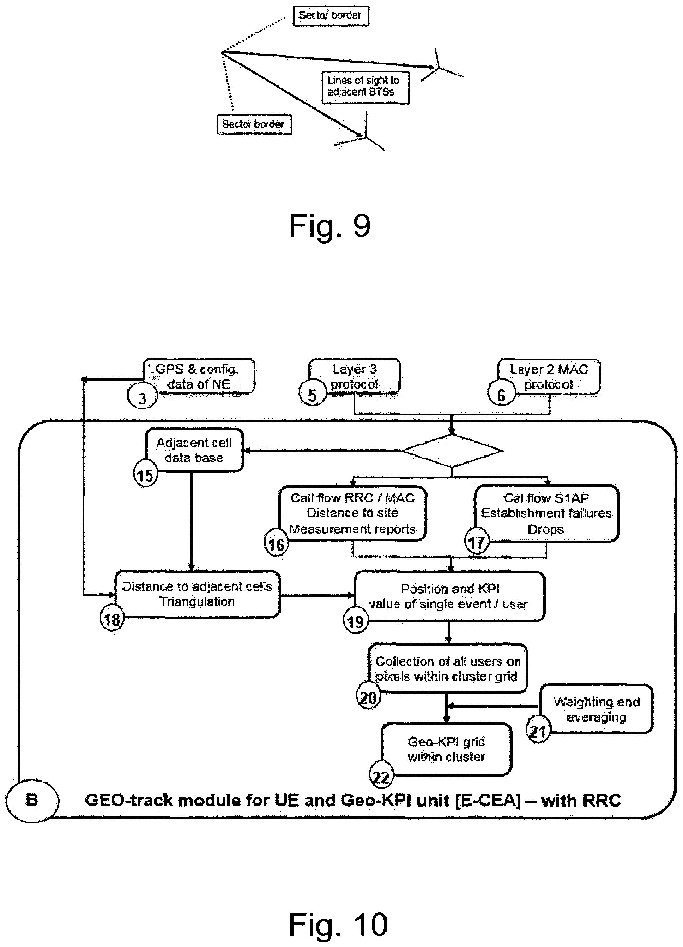

To position a user group not only its distance from the BTS must be known, but also its azimuth, which approximately is given by the orientation of the main antenna beam. To get a more accurate average azimuth, the typical mobility characteristic of the users within a cell is taken into account. Each line of sight from the serving cell to an adjacent BTS defines an azimuth which is weighted with the number of (soft) handover attempts to this BTS. In case of mobility to an adjacent sector, as azimuth the nominal sector border to this sector is adopted as azimuth. The average azimuth adopted for the user group then is the weighted average of the individual azimuths defined by the adjacencies. Fig. 9 schematically explains the azimuths defined by adjacent cells.

### - Element 11 - average position and KPI value of user group

Once the typical distance from the site and the typical azimuth of the dominating users are given, their average position relative to the site is known. Adding this relative position to the GPS coordinates of the site, one gets the average GPS position of this user group. To this position the average KPI experienced by the group is assigned together with its gradient.

### - Element 12 - KPI prediction per pixel within cluster grid

Average positions and KPI values of user groups give a set of discrete points within a cell cluster. These points follow a quite inhomogeneous distribution as the positions of the user groups are exactly equivalent to the distribution of the main traffic. For the NW operator, however, it is desirable to have a homogeneous grid based on pixels of constant size. To transform the irregular user group distribution into a regular grid, a filtering algorithm is applied which analyzes the contribution of each detected user group to each pixel (X/Y) of the map.

The KPI value to be expected for a user group at (X/Y) is derived on the basis of the average KPI value and its gradient assigned to the average position of the group. If the gradient cannot be estimated, simply the average KPI value experienced by the user group is taken for (X/Y).

### - Element 13 - detection and weighting of overlapping cells

Constructing a regular grid one has to take into account, that very frequently the UE does see not only the serving cell, but also (nearby) neighboring cells. Due to signal fluctuations even on a small scale different users therefore might be served by different cells. Consequently the average KPI value expected for a specific pixel is defined as a weighted average over all cells overlapping there.

To estimate the weight of a cell, besides the average positions of its user groups also their dispersions are taken into account. If (X/Y) is situated close to the traffic center of a cell, this gets a high weight. If the traffic center is far away, the corresponding cell is treated with low weight. If the dispersion of the traffic is low (the traffic concentrated to a small spot), the weight of the cell decreases rapidly with increasing distance to (X/Y). In case of an extended traffic distribution (typical especially for rural areas) the weight goes down slowly towards larger distance to (X/Y).

### - Element 14 - geo-KPI grid within a cluster

As result of the weighted averaging over all cells overlapping at a given location KPI values are given as a function KPI (X/Y) with regular steps in both directions. The step size is configurable, but the same both for X and Y (i.e. the pixels are treated as quadrangles).

### Module B geo-track module for UE and geo-KPI unit for E-CEA (with RRC)

The specific elements of the geo-track module for UE and geo-KPI unit for E-CEA (with RRC) and their arrangements of another further embodiment of the present invention are schematically shown in Fig. 10.

### - Element 15 - adjacent cell data base

Based on the call flow information provided by the layer 3 (element 5) and layer 2 MAC (element 6) protocols, for each cell a data base is set up indicating the radio coverage and quality performance of its adjacencies. With each tracing or log file session, this information is updated.

### - Element 16 - call flow RRC/MAC (distance to site and measurement reports)

For each user, the distance to the serving site is indicated at least during connection setup (WCDMA) or also during re-synchronization and handover (LTE). The UE measures regularly the radio performance of the serving and adjacent cells and informs the network about this by measurement reports, either in case of a (handover) event only, or periodically (if periodic reporting is enabled by the NW operator). Each event indicating distance or radio performance is stored together with its time stamp.

### - Element 17 - call flow S1AP (establishment failures and drops)

If the user cannot be connected to the network or if the service is interrupted unexpectedly, the NW operator wants to know, at which location such problems come up. Therefore protocol messages indicating such failures are stored as well again including the time stamp.

### - Element 18 - distance to adjacent cells and triangulation

Once a measurement report is sent by the UE, it is correlated with the content of the adjacent cell data base. This way the distance to each adjacent site is derived. The position of the UE at this moment then follows from classical triangulation. If one adjacent site is indicated only, together with the serving one just two circles are available, so that triangulation gives two possible solutions. If the distance between them does not exceed a configurable threshold, they are averaged; otherwise no positioning is performed. If the serving site is reported only, they are the following cases. If the serving cell is indicated only, as azimuth the orientation of the main antenna beam is adopted. If an adjacent sector is reported as well, it is adopted, that the UE is situated at the border between them.

### - Element 19 - position and KPI value of single event / user

For measurement reports indicating the radio performance of all cells visible for the UE the position can be estimated exactly for the time stamp of this message. For events like establishment failure or call drop, however, the corresponding messages usually do not contain detailed information about radio conditions. In such cases the solution extrapolates on basis of the last two positions before the failure.

### - Element 20 - collection of all users on pixels within cluster grid

Like the user groups detected by Module A, the single users (events) positioned by Module B are distributing according the traffic within the network. As a consequence again an irregular distribution is obtained. To generate a regular grid, all users (events) falling onto a specific pixel (X/Y) during a tracing or log file session are collected. With each session the content of each pixel is updated.

While Module A can indicate at a specific pixel (X/Y) the probability only, with which a (nearby) cell dominates, with Module B for each user the dominating cell is exactly known by the measurement reports. As KPI value valid for (X/Y) that one of the dominating active cell is adopted (in LTE there is always one active cell only, but in WCDMA one has to select among up to three active ones).

### - Element 21 - weighting and averaging

To generate KPI values per pixel, the individual values collected on (X/Y) are averaged, weighting them on basis of their statistical stability. To do this for each user it is checked, whether he experiences a stable performance or whether he suffers from strong fluctuations of radio coverage and quality. Furthermore the average KPI values at (X/Y) on basis of Module B are compared with the output of Module A (for details see the next section of this paper).

### - Element 22 - geo-KPI grid within a cluster

As result of the weighted averaging over all users (events) positioned within specific pixels KPI values are given as a function KPI (X/Y) with regular steps in both directions. The step size is configurable independently on the grid obtained with Module A, but the same both for X and Y (i.e. the pixels are treated as quadrangles). Usually map B can offer a better spatial resolution as map A, as with the positioning of individual users instead of user groups much more raw positions are available.

### Interaction between Module A (D-CEA) and Module B (E-CEA)

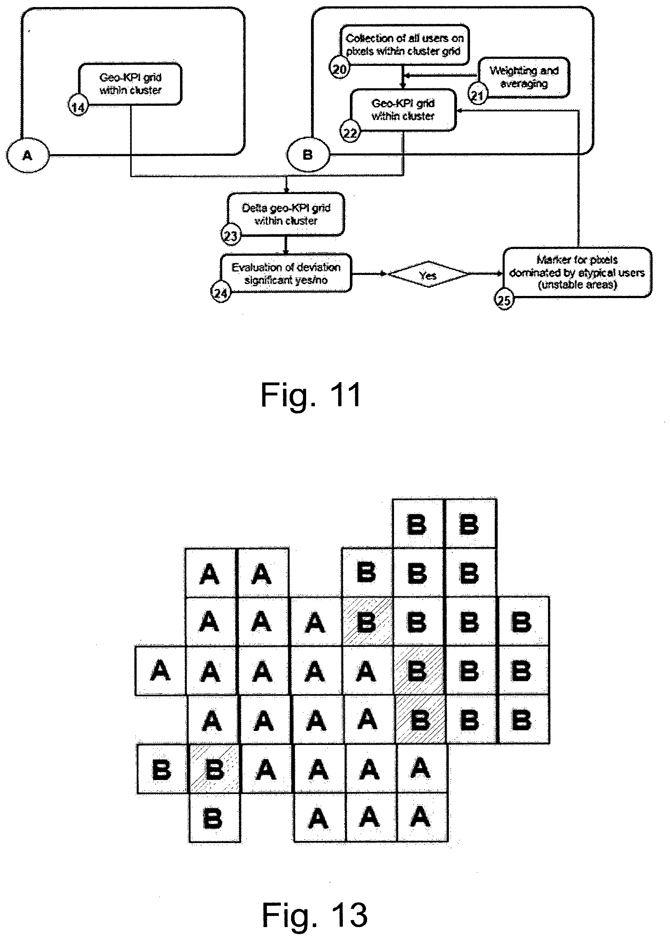

Interacting elements between Module A and Module B are schematically illustrated in Fig. 11 according to even another embodiment of the present invention.

### - Element 23 - delta geo-KPI grid within a cluster

The geo-KPI grids obtained by both modules are compared with each other. To do this, a difference map KPI (Module A) - KPI (Module B) is constructed. If map B is configured to offer a higher spatial resolution than map A, a second version of B is generated having exactly the same pixels as map A, before the difference map is calculated.

### - Element 24 - Evaluation of deviation

The average KPI values given by both grids of course are affected by statistical uncertainties. And it is a consequence the difference between them usually is not zero, but either positive or negative. The average values given by Module A are quite stable, as these are based on dominant user groups experiencing the typical performance within their cells. Module B in contradiction includes all (positioned) users, irrespectively whether these represent the typical NW performance or not. As a consequence huge deviations between the two maps can come up, if at a specific location many users with an atypical performance are detected.

For each pixel (X/Y) it is checked, whether the difference between the maps is explainable just by statistical uncertainties or not.

### - Element 25 - marker for pixels dominated by atypical users

Finally the pixels showing a significant deviation between map A and B are marked. Such areas usually undergo an unstable radio performance due to short term or small scale unexpected good (e.g. cell overshooting) or bad (e.g. coverage holes) conditions.

### Module B geo-track module for UE (without RRC, for LTE only)

Fig. 12 schematically illustrates elements of the geo-track module for UE and geo-KPI unit for E-CEA (without RRC) of an even another further embodiment of the present invention.

In LTE RRC and MAC tracing requires access to vendor specific interfaces and therefore an additional investment of the NW operator. Therefore as last topic of this paper an alternative algorithm for single user geo-tracking is discussed which is less accurate, but requires access to the open S1 interface only.

Without RRC and MAC tracing Module B cannot deliver (radio) geo-KPI grids anymore, but still locate below cell level drops of radio links as well as track mobile users performing inter e-Node B (Enhanced/Evolved Node B) HO (Handover). The algorithm is suitable especially for (sub) urban areas, where cells are small and inter e-Node B HOs rather frequent due to strong signal fluctuations introduced by shadowing.

### - Element 17 - call flow S1AP (inter e-Node B HO and IOperational Subsystem (OSS) of radio connection)

In principle element 17 is the same as for the full version of Module B. The most important messages, however, are now related to inter e-Node-B HO and establishment failure and call drop triggered by an IOperational Subsystem (OSS) of the radio connection between the UE and e-Node B.

### - Element 26 - short term geo-KPI grid within a cluster delivered by Module A

For single user positioning without RRC / MAC tracing Module B requires as input the geo-KPI grids delivered by Module A. While the coverage distribution within a cell can be considered as static, this is not so for the radio quality, as it depends on the load of the cell. As the radio KPI indicated by the grids shall be correlated with events coming up at specific time stamps, especially quality maps now shall not include long term OSS counter statistics, but only that one closest to the time stamps of the events. On the other side a grid requires a reliable user group statistic for each cell. As an adequate compromise quality grids are generated in terms of a time series covering 5 consecutive samples of OSS statistics in form of a sliding window.

### - Element 27 - long term dominant server grid within a cluster delivered by Module A

In LTE HO (Handover) events are based on coverage measurements so that a long term grid can be used as reference. To define the dominant cell at a given pixel (X/Y) Module A considers, however, the traffic distribution instead of the coverage. Each pixel is assigned to that cell, which has the highest weight according element 13.

Traffic distribution and coverage, however, are equivalent. The capability of a cell 1 to attract more traffic than a cell 2 at the same location requires that cell 1 offers better coverage than cell 2.
- Element 28 - below cell level forensic by correlation with pixels indicating unstable or poor air interface

Often the establishment of an ERAB (E-UTRAN Radio Access Bearer) fails or an ERAB drops, because the radio connection between UE and enhanced node B is broken. This can occur because already the average cell coverage or quality on the Downlink (DL) or UL is too low, or because of too strong fluctuations of these performance indicators. To position ERAB failures triggered by radio link drop, the solution is looking for pixels within the serving cell fulfilling at least one of the following conditions:
DL analysis
   - Poor DL coverage
   - Unstable DL coverage in spite of good average coverage
   - Poor DL quality in spite of good coverage
   - Unstable DL quality in spite of good average QoS
UL analysis
   - Poor UL coverage
   - Unstable UL coverage in spite of good average coverage
   - Poor UL quality in spite of good coverage
   - Unstable UL quality in spite of good average QoS
DL and UL poor radio quality root cause analysis
   - Poor coverage
   - High air interface utilization
   - High adjacent cell interference

Coverage and quality are often correlated to each other, as well as average values and scatter. Poor quality therefore can be treated as independent criterion only, if the coverage still is good (in this case the root cause is either high air interface utilization or adjacent cell interference). Similarly a high scatter of the average performance can be handled as independent information only, if the average still is good (in this case the air interface is unexpectedly unstable even in the cell center). For coverage evaluation long term grids are used given directly by element 14, while the quality analysis is based on short term grids provided by element 26.

With each criterion fulfilled by a pixel it gets a penalty. The more penalties are obtained, the more the pixel is a candidate location for a radio link drop.

### - Element 29 - below cell level forensic by correlation with pixels at border between source and target

If an inter e-Node B HO is performed, the S1 APPLICATION PROTOCOL (S1AP) indicates both the source and the target cell. In LTE there is hard HO (Handover) only, which is triggered when an adjacent cell is already stronger than the serving one. Thus one can expect, that a HO is triggered shortly behind the border between the source and target cell.

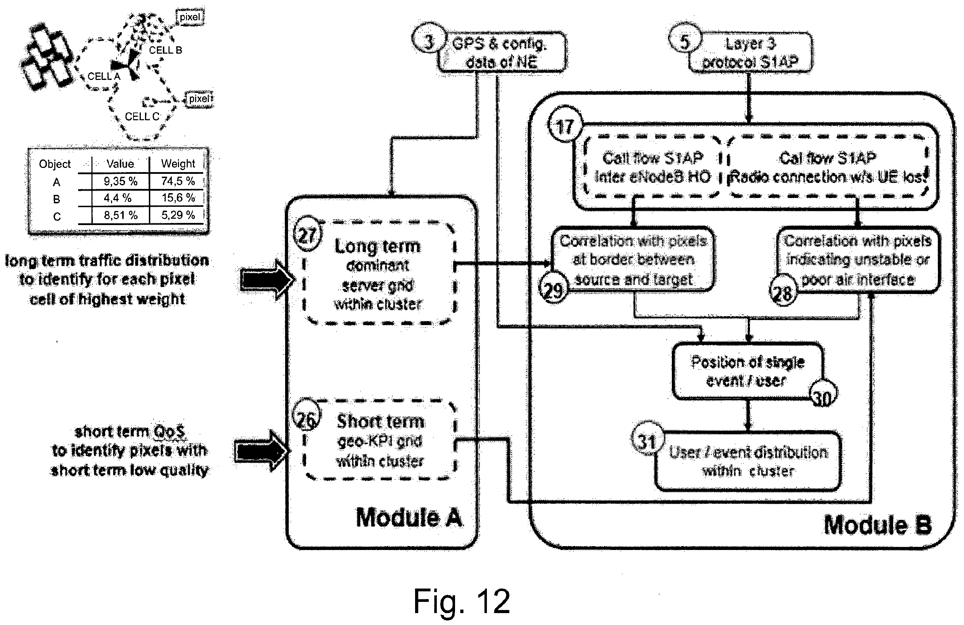

The cell borders and thus the candidate pixels are taken from the dominant server grid generated by element 27. If e.g. one pixel (X/Y) belongs to cell A and an adjacent pixel to cell B, pixel A is identified as belonging to the border from cell A to cell B. A pixel is defined as adjacent to (X/Y), if it has one edge common with pixel (X/Y). Fig. 13 shows an exemplary definition of cell border. Pixels marked with grey color are candidate locations for handover from cell A to cell B. If the target cell is fragmented, the border alone does not define a unique estimate of the position of the user.

Occasionally a cell is fragmented (e.g. due to unexpected overshooting or antenna side or back lobes), i.e. its best server area consists of two or even more regions which are separated from each other by pixels belonging other cells. The border from a cell A to such a fragmented cell B then does not define a unique estimate of the position of the UE. In this case the following criteria are applied to select the most probably segment of the border:
- Stability of HO decision (quick back HO to originally serving cell, quick HO to a third cell)
- Geographical location of third HO target relative to fragmented cell

The selection of the most probable pixel within the selected border segment is based on the orientation of the antenna beam defining the target cell, but also on the path of the user estimated from call setup till the HO.

### - Element 30-position of single user / event

Often a radio link drop occurs after a HO failure. In this case the position is derived from the intersection of the candidate area of the drop and that one for the HO. If several consecutive HOs are performed during a call, the distance between the candidate areas and the time stamps of the HOs allow to estimate the speed of the UE and to extrapolate its path, if a radio triggered ERAB failure occurs shortly afterwards. In case of ping-pong mobility between two cells it is adopted, that the user is situated directly at their common border.

### - Element 31 - user event distribution within cluster

Finally all positioned radio link drops and HO events are collected and presented as event distribution maps. User paths are generated by interpolating between the positions of single events.

The invention is explained above through exemplary embodiments which although preferred do not limit the invention to the combination of individual features thereof, but includes all variations, modifications, substitutions and combinations of features suitable to realize the inventive concept which the man skilled in the art can take from the present application at all, i.e. especially the claims, the general presentation in the introductory part of the description as well as the description of the embodiments in the context of his special knowledge and the prior art. Especially, any combination of individual features disclosed and sufficient to reach the invention is part of this disclosure and the invention itself.

## Claims

1. Method for enhancing a cellular mobile network comprising Network Elements (NE) as a network control, a plurality of transmission stations and a plurality of individual User Equipment (UE), wherein both
A) a) a Dominant Customer Experience Analysis (D-CEA) below cell level for dominant traffic and also
A) b) an Event Customer Experience Analysis (E-CEA) with individual subscribers within said cellular mobile network are carried out and
B) based on the results thereof at least one parameter of at least one of the components of said cellular mobile network is adapted in a manner so that Quality of Service (QoS) performance is improved.

2. Method according to claim 1, wherein said Dominant Customer Experience Analysis (D-CEA) is a method to localize and determine a specific grade of quality or service (geo-Key Performance Indicator (KPI)) from point of radio conditions measured by UE and network nodes for the dominant traffic in a geographical area within a cell cluster, and defines for the dominant users a statistically significant QoS in such an area below cell level.

3. Method according to claim 1 or 2, wherein said Dominant Customer Experience Analysis (D-CEA) provides for the detection of dominant traffic groups below cell level and the analysis of the quality of service experienced on all layers 1 to 3 by such groups.

4. Method according to any of the preceding claims, wherein said Dominant Customer Experience Analysis (D-CEA) uses as input OSS PM data obtained directly from the NE as well as the GPS (Global Positioning System) coordinates of the network sites and configuration data like antenna configuration and RRM parameter settings.

5. Method according to any of the preceding claims, wherein said Dominant Customer Experience Analysis (D-CEA) identifies dominant user groups within cells and gives for each group average GPS coordinates and average KPI for radio and service quality.

6. Method according to any of the preceding claims, wherein said Dominant Customer Experience Analysis (D-CEA),
i) if for a KPI raw counters are available in terms of a histogram, estimates also the gradient of this KPI along increasing distance from the radio site as e.g. the decrease of coverage in dB per km,
ii) constructs from these raw geo-KPI a grid map with configurable pixel size, indicating for each pixel the average radio and QoS performance, and
iii) gives, if at a specific pixel several cells overlap each other, a weighted average, taking into account the traffic distribution and if available also the gradient of the KPI within each overlapping cell.

7. Method according to any of the preceding claims, wherein said Dominant Customer Experience Analysis (D-CEA) processes OSS performance data taken with high time granularity, as e.g. 1 hour, over a long time period, as e.g. 1 month.

8. Method according to any of the preceding claims, wherein said Event Customer Experience Analysis (E-CEA) is a method to identity and localize a specific single user (UE geo-KPI) which is based either on events triggered by a specific quality or service from point of radio conditions, or on forced measurement reporting of the UE. E-CEA is performed by 3GPP layer 3 protocol call flow detection and optional additional scanning of the vendor proprietary MAC layer.

9. Method according to any of the preceding claims, wherein said Event Customer Experience Analysis (E-CEA) provides for geo-positioning of single events coming up on layer 3, and uses requires as input at least the layer 3 call flows together with the GPS coordinates of the sites.

10. Method according to claim 9, wherein said Event Customer Experience Analysis (E-CEA) also additionally uses the layer 2 MAC protocol to obtain a high accuracy for positioning within Long-Term Evolution (LTE) networks.

11. Method according to any of the preceding claims, wherein both D-CEA and E-CEA are combined into a single method in which D-CEA gives the typical, statistically significant QoS for areas below cell level, which is benchmarked against the individual QoS determined for single users (events) by E-CEA so as to allow filtering out untypical, statistically unstable layer 3 measurement results to evaluate the impact of long term QoS for network optimization requirements and tasks.

12. Method according to any of the preceding claims, wherein, to benchmark layer 3 events positioned with E-CEA with the QoS located by D-CEA both D-CEA and E-CEA interact with each other so that lower layer root causes, as e.g. poor Uplink (UL) coverage, for layer 3 events, as e.g. call drop, can be located below cell level as well, so as to reach network performance optimization on all layers.

13. Method according to any of the preceding claims, wherein said Event Customer Experience Analysis (E-CEA) provides for process performance data for lower time period in comparison to Dominant Customer Experience Analysis (D-CEA), as e.g. 1 week, and it indicates rather short term geo-KPI below cell level with preferably higher spatial resolution than Dominant Customer Experience Analysis (D-CEA), but possibly lower statistical stability so as to allow the NW operator to detect small spots with abnormal performance, which are not resolved by Dominant Customer Experience Analysis (D-CEA), and to evaluate the root causes of individual end customer complains.

14. Method according to any of the preceding claims, wherein D-CEA provides for geo-KPI grids which are stable against fading and other short term statistical fluctuations, as these are based on average KPI assigned to average positions of dominant user groups within cells so that these maps can be used as reference when benchmarking the layer 3 performance indicated by the call flow for single users with the lower layer performance indicated by OSS counter statistic for user groups, and E-CEA provides for geo-KPI grids which are quite sensitive against short term fluctuations of the radio and related QoS performance, as they are based on single events assigned to positions of individual users so that positions are estimated again on the basis of single events, measurement reports giving radio information for the serving and adjacent cells.

15. System for enhancing a cellular mobile network comprising Network Elements (NE) as a network control, a plurality of transmission stations and a plurality of individual User Equipment (UE), wherein the system is adapted and contains all components to carry out the method according to any of claims 1 to 14.
